# EUROPÄISCHE PATENTSCHRIFT

(11) **EP 2 057 043 B1**
(45) Veröffentlichungstag und Bekanntmachung des Hinweises auf die Patenterteilung: **23.06.2010**
(21) Anmeldenummer: 07788232.2
(22) Anmeldetag: 06.08.2007
(51) Int. Cl.: B60R 21/203

(54) **VORRICHTUNG ZUR BEFESTIGUNG EINER AIRBAGEINHEIT IN EINER BAUGRUPPE EINES KRAFTFAHRZEUGS, INSBESONDERE IN EINEM LENKRAD, DURCH VERRASTEN**
DEVICE FOR SNAP-FASTENING AN AIRBAG UNIT IN A SUBASSEMBLY OF A MOTOR VEHICLE, ESPECIALLY IN A STEERING WHEEL
DISPOSITIF POUR FIXER UNE UNITÉ D'AIRBAG DANS UN SOUS-ENSEMBLE D'UN VÉHICULE AUTOMOBILE, EN PARTICULIER DANS UN VOLANT DE DIRECTION, PAR ENCLENCHEMENT

(30) Priorität: 01.09.2006 DE 102006041734
(43) Veröffentlichungstag der Anmeldung: 13.05.2009
(73) Patentinhaber: Takata-Petri AG, 63743 Aschaffenburg (DE)
(72) Erfinder: HAGELGANS, David, 63741 Aschaffenburg (DE); WEIMER, Alexander, 63741 Aschaffenburg (DE); KRIEGER, Alexander, 63839 Kleinwallstadt (DE); WEIGAND, Steffen, 63739 Aschaffenburg (DE)
(74) Vertreter: Baumgärtel, Gunnar
(86) Internationale Anmeldenummer: PCT/EP2007/058107
(87) Internationale Veröffentlichungsnummer: WO 2008/025641

(56) Entgegenhaltungen:
- WO-A-98/15431
- DE-U1- 29 602 630
- DE-U1- 29 621 295
- US-A1- 2003 151 236

## Beschreibung

Die Erfindung betrifft eine Vorrichtung zur Befestigung einer Airbageinheit in einer Baugruppe eines Kraftfahrzeuges, insbesondere in einem Lenkrad, durch Verrasten nach dem Oberbegriff des Anspruchs 1.

Vorrichtungen zur Befestigung einer Airbageinheit in einer Baugruppe eines Kraftfahrzeuges sind bekannt. So ist aus der EP 1 314 621 A1 ein Airbagmodul bekannt, bei dem die Airbageinheit an ihrer Außenseite elastisch verformbare Rasthaken aufweist, die hinter Rastabschnitte an der Innenseite der Seitenwand des Airbaggehäuses greifen können. Dabei wird die Airbageinheit von oben in das Airbaggehäuse eingeführt. Sobald die Rasthaken in den Bereich der Rastabschnitte gelangen, gleiten die Rasthaken an den Rastabschnitten entlang, wobei sie in Richtung der Seitenwand der Airbageinheit elastisch verformt werden. Bei Erreichen der Endlage der Airbageinheit im Airbaggehäuse federn die Rasthaken zurück und greifen unter die Rastabschnitte des Airbaggehäuses. Damit ist das Airbagmodul im Airbaggehäuse fixiert. Diese Vorrichtung weist den Nachteil auf, dass die Baugruppe, mit der die Airbageinheit verrastet werden soll, eine Seitenwand aufweisen muss, an der die Rastabschnitte angeordnet werden können. Es ist nicht möglich, die Airbageinheit mit einer ebenen Platte zu verbinden.

Weiterhin ist aus dem US-Patent 5 620 201 eine Vorrichtung zur Verrastung einer Airbageinheit in einem Airbaggehäuse bekannt. Bei dieser Vorrichtung weist die Airbageinheit an gegenüberliegenden Seiten je einen Schnappmechanismus auf. Dieser weist ein Gehäuse auf, in dem ein federbelasteter Stift gelagert ist, der bei der Montage der Airbageinheit durch die jeweilige Seitenwand des Airbaggehäuses entgegen der Federkraft zurückgedrückt wird und an der Innenwand des Airbaggehäuses entlang gleitet bis er durch die Feder in einen Ausschnitt des Airbaggehäuses gedrückt wird, wodurch die Airbageinheit mit dem Airbaggehäuse verriegelt ist. Eine Verriegelung ist auch mit einer Kraftfahrzeugbaugruppe möglich, die keine Seitenwand aufweist. In diesem Fall muss auf der Baugruppe für jeden Schnappmechanismus ein Winkel angebracht sein, der einen senkrechten, die Seitenwand ersetzenden, Abschnitt aufweist. Auch bei dieser Vorrichtung muss also eine Seitenwand oder ein entsprechender Ersatz vorgesehen sein, um die Airbageinheit zu fixieren.

Aus der gattungsbildenden DE 296 21 295 U1 ist eine Vorrichtung zur Befestigung eines Airbagmoduls im Lenkrad unter Verwendung mindestens eines aktiven und mindestens eines zugeordneten passiven Tastelementes bekannt, wobei ein schwenkbares oder verschiebbares starres Bauteil als aktives Rastelement im Lenkradskelett vorgesehen ist.

Der Erfindung liegt die Aufgabe zugrunde, eine Airbageinheit sowohl an einer plattenförmigen Baugruppe als auch an einer Baugruppe, die eine Seitenwand aufweist, zu verrasten.

Erfindungsgemäß wird das gemäß den Merkmalen des Anspruchs 1 erreicht.

Bei einer Vorrichtung zur Befestigung einer Airbageinheit in einer Baugruppe eines Kraftfahrzeugs durch Verrasten, insbesondere In einem Lenkrad eines Kraftfahrzeuges, wobei an der Airbageinheit und an der Baugruppe des Kraftfahrzeugs einander zugeordnete Rastelemente vorgesehen sind, ist erfindungsgemäß an der Airbageinheit oder an der Baugruppe des Kraftfahrzeugs mindestens ein Rasthaken vorgesehen. Weiterhin ist diesem an der jeweils anderen Baugruppe mindestens eine schwenkbare Kunststoffrastlasche zugeordnet, die der Rasthaken in der Raststellung in mindestens einem Bereich hintergreift. Die Kunststoffrastlasche ist an einem Ende schwenkbar gelagert und weist anschließend einen verformbaren Abschnitt und daneben einen schwenkbaren Abschnitt auf, wobei dem verformbaren Abschnitt ein Anschlag an der Baugruppe des Kraftfahrzeugs zugeordnet ist und wobei der hintergreifbare Bereich am schwenkbaren Abschnitt vorgesehen ist.

Diese Vorrichtung weist den Vorteil auf, dass die Rasthaken und die zugeordnete schwenkbare Kunststoffrastlasche an beliebigen Stellen der Airbageinheit und der Baugruppe des Kraftfahrzeugs angeordnet werden können. Wenn als Baugruppe des Kraftfahrzeugs ein Lenkrad vorgesehen ist, bei dem durch Niederdrücken der Airbageinheit die Hupe betätigt wird, werden durch die erfindungsgemäße Art der Verrastung weder beim Niederdrücken der Airbageinheit noch beim Zurückfedern Nebengeräusche verursacht.

Es ist zweckmäßig, dass eine dem Anschlag an der Baugruppe des Kraftfahrzeugs zugeordnete Seite des verformbaren Abschnitts und eine dem Rasthaken zugeordnete Seite des schwenkbaren Abschnitts von der Lagerstelle der Kunststoffrastlasche aus schräg voneinander weg verlaufen, d.h., die entsprechende Seite des verformbaren Abschnitts verläuft schräg in Richtung des Anschlags an der Baugruppe des Kraftfahrzeugs und die entsprechende Seite des schwenkbaren Abschnitts verläuft schräg in Richtung des Rasthakens.

Vorzugsweise weist der schwenkbare Abschnitt eine größere Dicke als der verformbare Abschnitt auf.

In einer Ausführungsform ist die Lagerstelle der Kunststoffrastlasche an einer plattenförmigen Baugruppe des Kraftfahrzeugs oder an einem plattenförmigen Abschnitt einer mit einer Seitenwand versehenen Baugruppe des Kraftfahrzeuges im Abstand zu dieser Baugruppe bzw. diesem Abschnitt vorgesehen und der verformbare und der schwenkbare Abschnitt ragen in einen Durchbruch dieser Baugruppe bzw. dieses Abschnitts, wobei der verformbare Abschnitt an der Wand des Durchbruchs anliegt.

In einer weiteren Ausführungsform ist die Lagerstelle der Kunststoffrastlasche an mindestens einer Seitenwand der Baugruppe des Kraftfahrzeuges im Abstand zu dieser Seitenwand vorgesehen, und der verformbare Abschnitt liegt an der Seitenwand an.

In einer ersten Ausführungsform sind für die Lagerung der Kunststoffrastlasche zwei zumindest teilweise hohlzylinderförmige Lagerstellen vorgesehen, in die zwei zylinderförmige Ansätze der Kunststoffrastlasche einsetzbar sind. Die Lagerstellen sind vorzugsweise nach Art von Klauen einseitig offen.

In einer zweiten Ausführungsform ist die Lagerstelle für die Kunststoffrastlasche zylinderförmig ausgebildet und die Kunststoffrastlasche weist einen über diese Lagerstelle greifenden Ausschnitt auf, der zumindest teilweise hohlzylinderförmig und einseitig offen ist.

Vorzugsweise sind der Rasthaken an der Airbageinheit und die Lagerstelle für die Kunststoffrastlasche an der Baugruppe des Kraftfahrzeugs vorgesehen.

In einer weiteren Ausgestaltung der Erfindung ist vorgesehen, dass der schwenkbare Abschnitt der Kunststoffrastlasche eine dem Rasthaken zugeordnete schräge Fläche aufweist, die so verläuft, dass der Rasthaken beim Druck auf diese Fläche zunehmend stärker geschwenkt wird.

Zur Verbindung der Airbageinheit mit der Baugruppe des Kraftfahrzeuges sind vorzugsweise drei Rasthaken vorgesehen, wobei zwei Rasthaken Kunststoffrastlaschen zugeordnet sind, während dem dritten Rasthaken ein Hinterschnitt in der gegenüberliegenden Baugruppe zugeordnet ist. Es ist aber auch möglich, dass zur Verbindung der Airbageinheit mit der Baugruppe des Kraftfahrzeuges drei Rasthaken vorgesehen sind, wobei ein Rasthaken einer Kunststoffrastlasche zugeordnet ist, während den zwei weiteren Rasthaken jeweils ein Hinterschnitt in der gegenüberliegenden Baugruppe zugeordnet ist.

Als Baugruppe des Kraftfahrzeuges zur Befestigung der Airbageinheit ist in einem Lenkrad vorzugsweise das Skelett des Lenkrades vorgesehen.

Bei einer in einem Lenkrad angeordneten Airbageinheit ist diese zur Betätigung mindestens eines Hupenkontaktes entgegen dem Druck mindestens einer Feder in Richtung der Lenkradnabe oder einer Kontaktbrücke bewegbar.

Es ist zweckmäßig, dass die dem Rasthaken zugeordnete Fläche des schwenkbaren Abschnitts der Kunststoffrastlasche nach mindestens einer Seite eine solche Schräge aufweist, dass der schwenkbare Abschnitt mittels eines Stiftes zur Entriegelung der Verbindung zwischen der Airbageinheit und der Baugruppe des Kraftfahrzeuges vom Rasthaken wegdrückbar ist.

Weiterhin ist es auch möglich, dass die dem schwenkbaren Abschnitt der Kunststoffrastlasche zugeordnete Fläche des Rasthakens nach mindestens einer Seite eine solche Schräge aufweist, dass der schwenkbare Abschnitt mittels eines Stiftes zur Entriegelung der Verbindung zwischen der Airbageinheit und der Baugruppe des Kraftfahrzeuges vom Rasthaken wegdrückbar ist.

Die Erfindung soll in Ausführungsbeispielen anhand von Zeichnungen erläutert werden. Es zeigen:
- Fig. 1: eine perspektivische Ansicht einer erfindungsgemäßen Vorrichtung in einer ersten Ausführungsform;
- Fig. 2: den Einrastvorgang der erfindungsgemäßen Vorrichtung;
- Fig. 3: die verrastete Lage der erfindungsgemäßen Vorrichtung;
- Fig. 4: die Einzeldarstellung eines Rasthakens und einer Kunststoffrastlasche:
- Fig. 5: eine perspektivische Ansicht der Lagerung der Kunststoffrastlasche der ersten Ausführungsform;
- Fig. 6: eine perspektivische Darstellung einer Lagerstelle für eine Kunststoffrastlasche in einer zweiten Ausführungsform;
- Fig. 7: eine zweite Ausführungsform der Kunststoffrastlasche;
- Fig. 8: eine perspektivische Ansicht einer erfindungsgemäßen Vorrichtung mit der zweiten Ausführungsform der Kunststoffrastlasche;
- Fig. 9: den Einrastvorgang der Ausführungsform nach Fig. 8;
- Fig. 10: die verrastete Lage der Ausführungsform nach Fig. 8;
- Fig. 11: die verrastete Lage der Ausführungsform nach Fig. 8 mit einem Hupenkontakt;
- Fig. 12: eine Ansicht, aus der die Zuordnung der Rasthaken und der Kunststoffrastlasche erkennbar ist.
- Fig.13: eine perspektivische Ansicht eines Lenkradteils mit Lagerstellen für die Kunststoffrastlasche der zweiten Ausführungsform;
- Fig. 14: eine perspektivische Ansicht der Unterseite einer verrasteten Vorrichtung mit einem Stift zur Entriegelung;
- Fig. 15: eine Ausführungsform, bei der das Lager für die Kunststoffrastlasche an einer Seitenwand angebracht ist;
- Fig. 16: eine Ausführungsform, bei der ein Haken für eine Rastlasche und zwei Haken für einen Hinterschnitt vorgesehen sind:

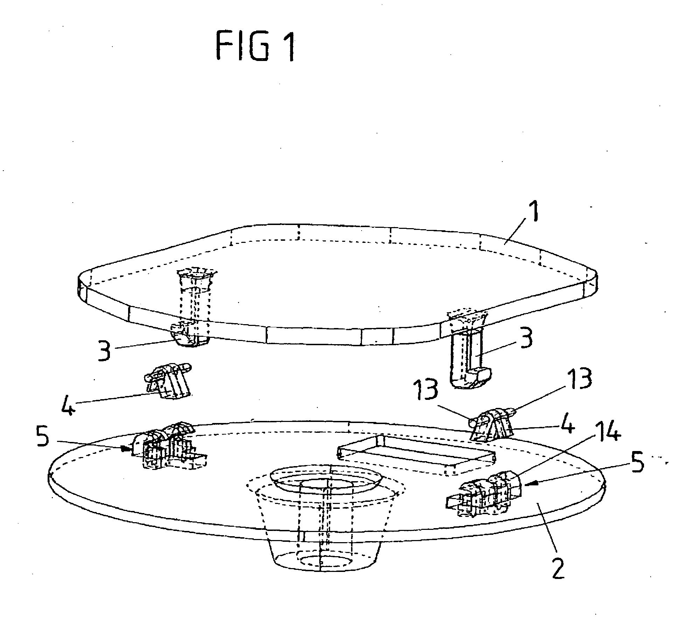

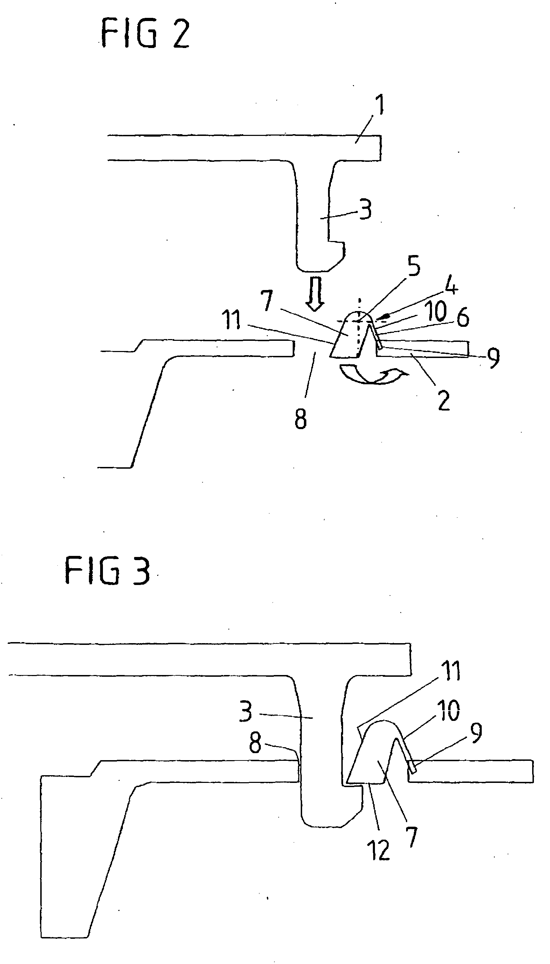

In der Fig. 1 ist ein unterer plattenförmiger Abschnitt einer Airbageinheit 1 dargestellt, der mit einem Skelettteil 2, z.B. einer Lenkradnabe oder einer am Lenkrad befestigten Kontaktbrücke, verrastet werden soll. Hierzu weist die Airbageinheit an ihrer Unterseite Rasthaken 3 auf, denen am Skelettteil 2 Kunststoffrastlaschen 4 zugeordnet sind, die zylinderförmige Ansätze 13 aufweisen, die am Skelettteil 2 in Lagern 5 (Fig. 2) schwenkbar gelagert sind.

Aus den Figuren 2 und 3 ist ersichtlich, dass die Kunststoffrastlaschen 4 einen verformbaren Abschnitt 6 und einen schwenkbaren Abschnitt 7 aufweisen. Die Kunststoffrastlaschen 4 sind so gelagert, dass die Abschnitte 6 und 7 in einen Durchbruch 8 des Skelettteils 2 ragen. Eine einem Anschlag 9 des Durchbruchs 8 zugeordnete Seite 10 des verformbaren Abschnitts 6 verläuft vom Lager 5 schräg in Richtung des Anschlags 9. Eine dem Rasthaken 3 zugeordnete Seite 11 des schwenkbaren Abschnitts 7 verläuft vom Lager 5 aus schräg in Richtung des Rasthakens 3. Zur Verrastung der Airbageinheit 1 mit dem Skelettteil 2 wird die Airbageinheit 1 in Richtung des Skelettteils 2 geschoben, wie es in der Fig. 2 durch den oberen Pfeil angedeutet worden ist. Jeder Rasthaken 3 trifft dabei zunächst auf den schwenkbaren Abschnitt 7 einer der Kunststoffrastlaschen 4. Beim weiteren Andrücken der Rasthaken 3 an die Kunststoffrastlaschen wird der verformbare Abschnitt 6, der mit seinem Ende an der Wand des Durchbruchs 8 liegt, in seinem, dem Lager benachbarten Bereich verformt, wodurch der schwenkbare Abschnitt 7 in Richtung des verformbaren Abschnitts 6 geschwenkt wird, wie es in der Fig.2 durch den gekrümmten Pfeil dargestellt worden ist. Der Rasthaken 3 greift dabei in den Durchbruch 8 ein. Sobald der Rasthaken das untere Ende des schwenkbaren Abschnitts 7 passiert hat, federt dieser zurück, so dass die in der Fig. 3 dargestellte Raststellung erzielt wird.

Dabei liegt der Rasthaken 3 bei der Darstellung der Fig. 3 an seiner linken Seite an der Wand des Durchbruchs 8 an. Somit wird das seitliche Weggleiten des Hakens verhindert. Bei Zug auf die Airbageinheit 1, z.B. bei der Auslösung des Airbags, verkeilt sich die Kunststoffrastlasche 4 nur noch mehr in dem Rasthaken, da der schräg in Richtung des Rasthakens verlaufende schwenkbare Abschnitt 7 dabei durch die Krafteinwirkung auf dessen Unterseite 12 gegen den Rasthaken 3 gedrückt wird.

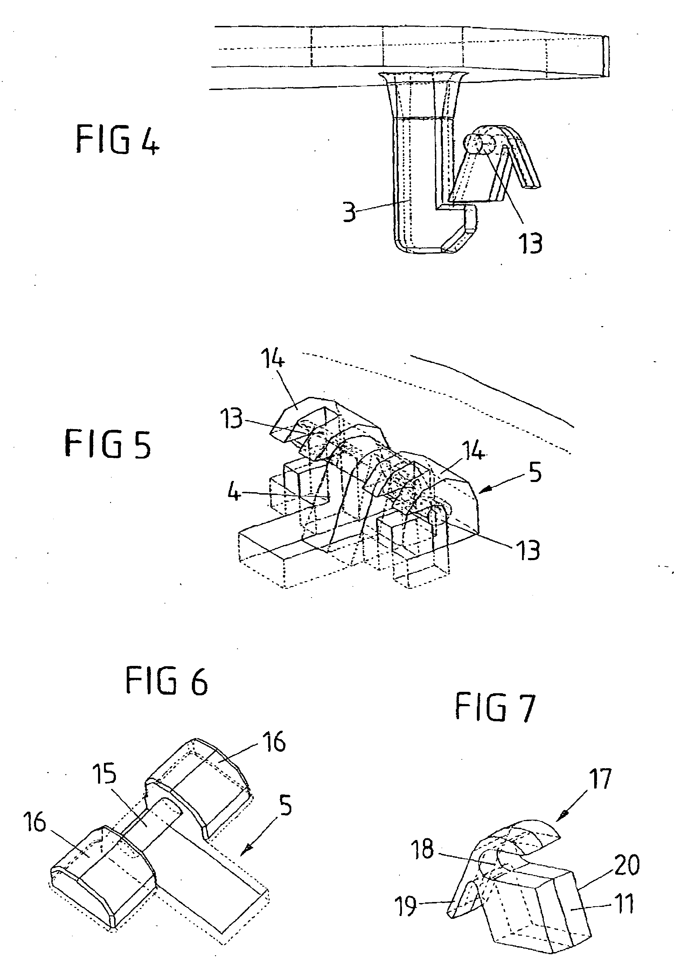

Aus der Fig. 4 ist insbesondere einer der zylinderförmigen Ansätze 13 der Kunststoffrastlasche 4 erkennbar. Die Fig. 5 zeigt das Lager 5 für die Ansätze 13. Dieses Lager weist im Abstand zueinander zwei teilweise hohlzylinderförmige Lagerstellen 14 auf. Diese sind an einer Seite offen, so dass die zylinderförmigen Ansätze 13 der Kunststoffrastlasche eingeschoben werden können. Die Kunststoffrastlasche 4 liegt dann zwischen den Lagerstellen 14, wie es aus der Fig. 5 ersichtlich ist.

Die Fig. 6 zeigt ein Lager 5 für eine zweite Ausführungsform der Kunststoffrastlasche. Hierbei weist das Lager 5 eine zylinderförmige Lagerstelle 15 zwischen zwei Halterungen 16 auf. Diesem Lager ist eine in der Fig. 7 dargestellte Kunststoffrastlasche 17 zugeordnet, die einen teilweise hohlzylinderförmigen Ausschnitt 18 aufweist, der einseitig nach Art einer Klaue offen ist. Die Kunststoffrastlasche 17 weist einen verformbaren Abschnitt 19 und einen schwenkbaren Abschnitt 20 auf

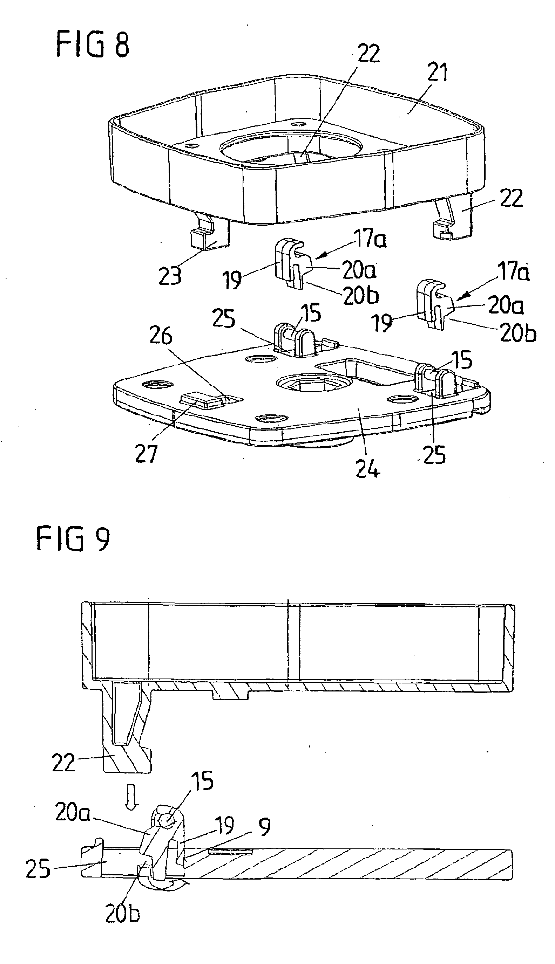

In der Fig. 8 ist eine Vorrichtung mit einer Variante 17a dieser zweiten Ausführungsform der Kunststoffrastlasche dargestellt. Bei dieser Kunststoffrastlasche 17a ist ein schwenkbarer Abschnitt 20a vorgesehen, der einen oberen breiteren Bereich und einen unteren schmaleren Bereich aufweist, so dass eine Lücke 20b entsteht. Eine Airbageinheit 21 weist zwei Rasthaken 22 und einen weiteren Rasthaken 23 auf. Den Rasthaken 22 ist je eine der Kunststoffrastlaschen 17a zugeordnet, die in je einer der zylinderförmigen Lagerstellen 15 gelagert sind, die ihrerseits auf einem Skelettteil 24 vorgesehen sind. Dabei ragen der verformbare Abschnitt 19 und der schwenkbare Abschnitt 20a jeder Kunststoffrastlasche 17a in einen Durchbruch 25 des Skelettteils 24. Dem Rasthaken 23 ist ein Durchbruch 26 zugeordnet, der teilweise von einem Teil 27 überdeckt ist, so dass ein Hinterschnitt entsteht.

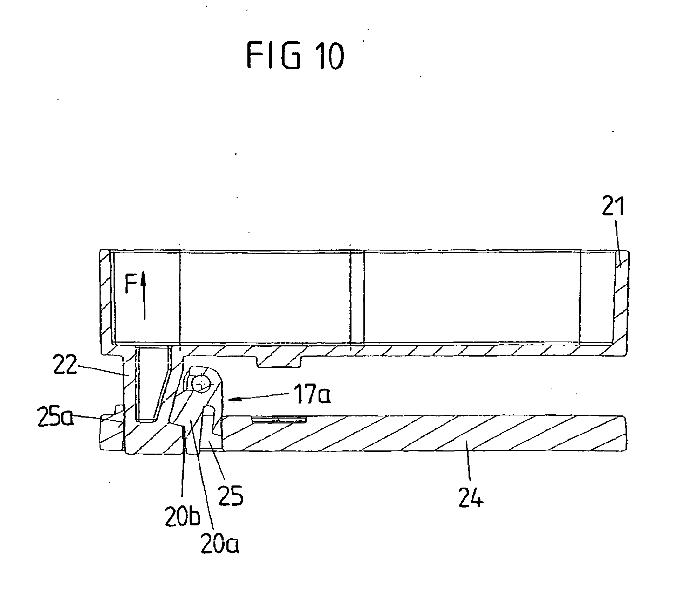

Bei der Montage der Airbageinheit 21 wird zuerst der Haken 23 in den Durchbruch 26 eingeführt, bis der Haken 23 unter das Teil 27 greift. Dann wird die Airbageinheit 21 mit den Haken 22 in Richtung der schwenkbaren Abschnitte 20a bewegt, wie es in der Fig. 9 durch den Pfeil angedeutet worden ist. Beim weiteren Niederdrücken greift jeder Haken 22 in den zugeordneten Durchbruch 25 ein und schwenkt den Abschnitt 20a in Richtung des verformbaren Abschnitts 19, bis der Haken 22 in die Lücke 20b eingreift, wie es in der Fig. 10 dargestellt ist. In dieser Stellung ist die Airbageinheit 21 auf dem Skelettteil 24 arretiert, indem die Haken 22 einerseits an der jeweiligen Kunststoffrastlasche 17a und andererseits an der Seitenwand 25a des jeweiligen Durchbruchs 25 anliegen. Auch bei dieser Ausführungsform wird bei Entfaltung des Airbags durch die dabei auftretende Kraft F eine Selbstblockade zwischen dem Haken 22 und der Kunststoffrastlasche 17a erreicht.

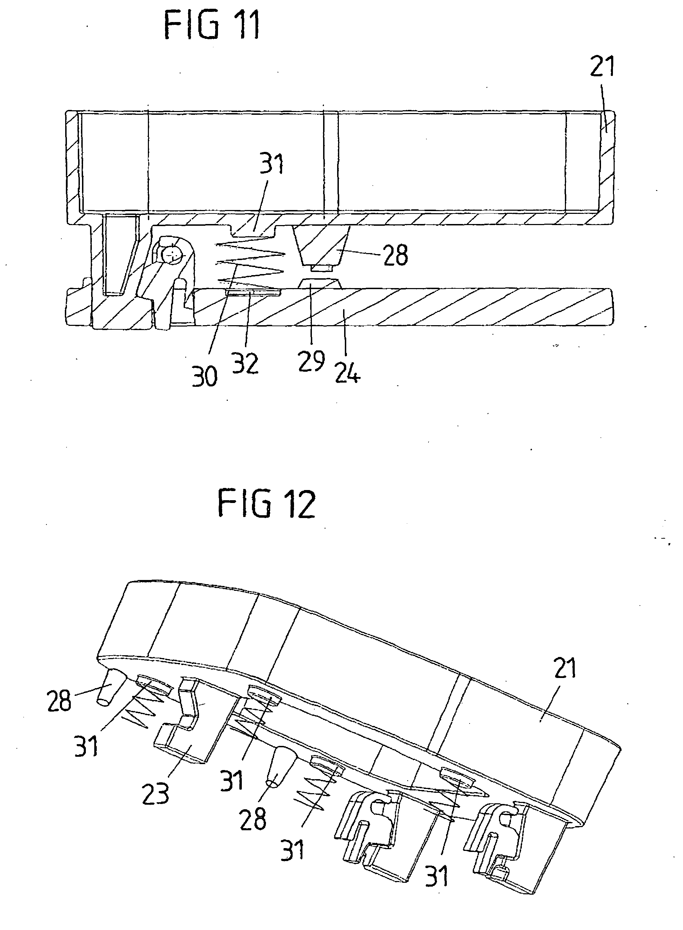

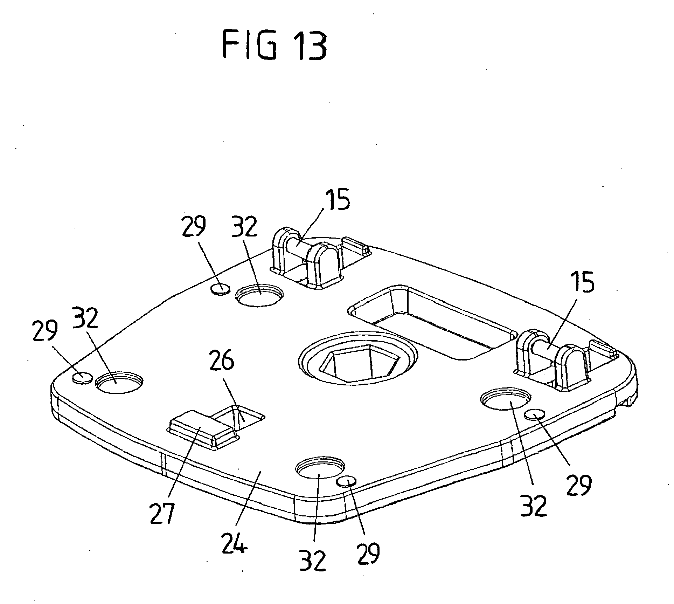

In der Fig. 11 ist eine Ausführungsform dargestellt, die gegenüber der Ausführungsform der Fig. 10 dahingehend verändert ist, dass an der Airbageinheit 21 mindestens ein Hupenkontakt 28 vorgesehen ist, dem am Skelettteil 24 ein Gegenkontakt 29 zugeordnet ist. Der Abstand zwischen diesen beiden Kontakten wird durch vier Federn 30 gewährleistet, die sich zwischen Nippeln 31 an der Airbageinheit 21 und Vertiefungen 32 am Skelettteil 24 erstrecken. In der Fig. 11 ist eine dieser Federn erkennbar. Aus der Fig. 12 ist die Lage der Nippel 31 und aus der Fig. 13 die Lage der Vertiefungen 32 erkennbar. Weiterhin sind in dieser Figur vier Gegenkontakte 29 erkennbar, denen vier Hupenkontakte 28 zugeordnet sind, von denen in der Fig. 12 nur zwei dargestellt sind. Selbstverständlich kann auch eine andere Anzahl von Hupenkontakten und entsprechenden Gegenkontakten vorgesehen sein. Bei dieser Ausführungsform kann der Haken 23 unterhalb des Teils 27 nach unten gedrückt werden, wodurch die Airbageinheit um die Lagerstellen 15 geschwenkt und die Hupenkontakte 28 gegen die Gegenkontakte 29 gedrückt werden.

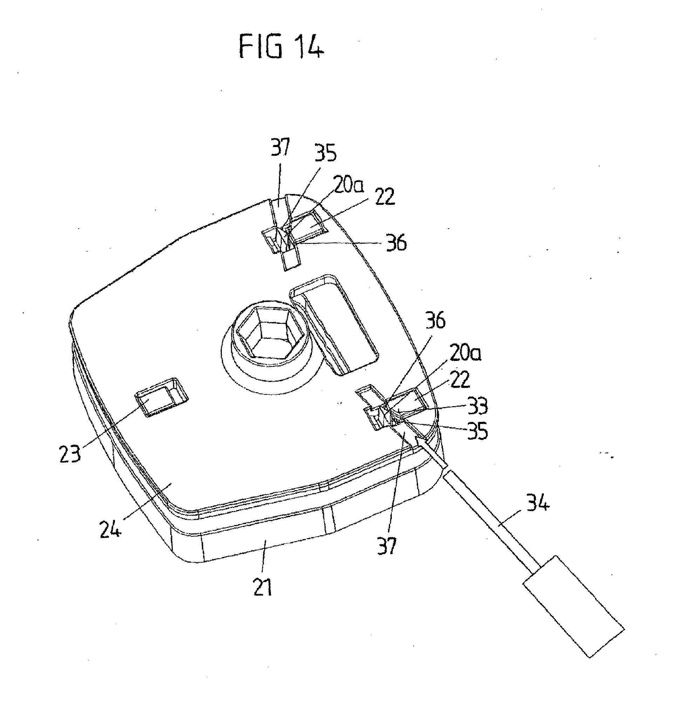

In der Fig. 14 ist die Unterseite der Airbageinheit 21 und des Skelettteils 24 in der Lage dargestellt, in der sie miteinander verbunden sind. Es sind die Unterseiten der Rasthaken 22, 23 und der schwenkbaren Abschnitte 20a der Kunststoffrastlaschen 17a erkennbar.

Die den schwenkbaren Abschnitten 20a der Kunststoffrastlaschen 17a zugeordnete Fläche des jeweiligen Rasthakens 22 weist eine solche Schräge 33 auf, dass jeder schwenkbare Abschnitt 20a mittels eines Stiftes 34 zur Entriegelung der Verbindung zwischen der Airbageinheit 21 und dem Skelettteil 24 vom jeweiligen Rasthaken 22 wegdrückbar ist. Bei der Ausführungsform der Fig. 14 weisen zusätzlich die schwenkbaren Abschnitte 20a Schrägen 35, 36 auf, wodurch die Entriegelung weiter erleichtert wird. Zur Führung des Stiftes 34 ist an der Unterseite des Skelettteils 24 im Bereich jedes schwenkbaren Abschnitts 20a ein seitlicher Kanal 37 vorgesehen.

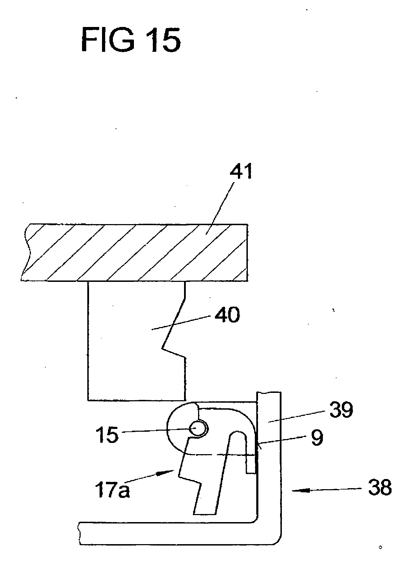

Bei der Ausführungsform der Fig. 15 ist an Stelle eines plattenförmigen Skelettteils ein Skelettteil 38 mit Seitenwänden 39 vorgesehen. Die zylinderförmigen Lagerstellen 15 sind bei dieser Ausführungsform an den Seitenwänden 39 angebracht. In der Fig. 15 ist eine Lagerstelle mit einer Kunststoffrastlasche 17a dargestellt. Dieser ist ein Rasthaken 40 an einer Airbageinheit 41 zugeordnet. Nach dem Verrasten liegt diese zwischen den Seitenwänden 39, so dass die Airbageinheit sicher arretiert ist. In der Fig. 15 ist die gegenüberliegende Seitenwand 39 nicht dargestellt.

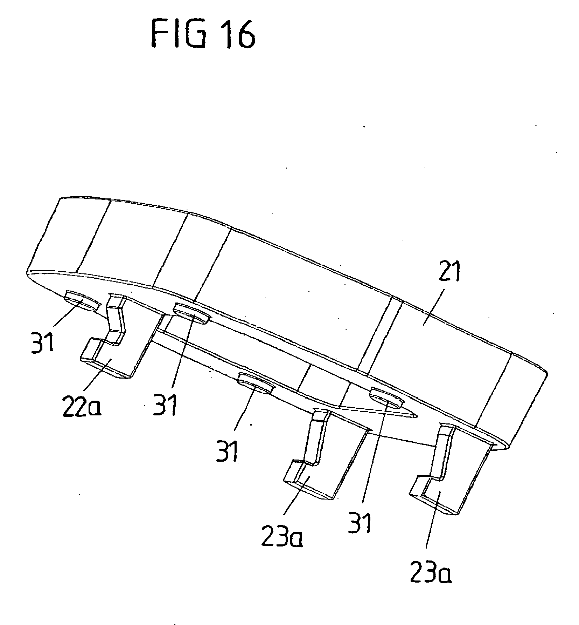

In der Fig. 16 ist eine Ausführungsform dargestellt, bei der ein Rasthaken 22a einer nicht dargestellten Kunststoffrastlasche zugeordnet ist und zwei Rasthaken 23a jeweils einem nicht dargestellten Hinterschnitt zugeordnet sind. Die Kunststoffrastlasche entspricht den in der Fig. 12 dargestellten Kunststoffrastlaschen und die Hinterschnitte entsprechen dem in der Fig. 12 dargestellten Hinterschnitt, der durch einen Durchbruch 26 und ein Teil 27 gebildet ist.

## Patentansprüche

1. Vorrichtung zur Befestigung einer Airbageinheit in einer Baugruppe eines Kraftfahrzeugs durch Verrasten, insbesondere in einem Lenkrad eines Kraftfahrzeuges, wobei an der Airbageinheit und an der Baugruppe des Kraftfahrzeugs einander zugeordnete Rastelemente vorgesehen sind, wobei an der Airbageinheit (1, 21, 41) oder an der Baugruppe des Kraftfahrzeugs (2, 24, 38) mindestens ein Rasthaken (3, 22, 40) vorgesehen ist, und wobei diesem an der jeweils anderen Baugruppe mindestens eine schwenkbare Kunststoffrastlasche (4, 17, 17a) zugeordnet ist, die der Rasthaken (3, 22, 40) in der Raststellung in mindestens einem Bereich hintergreift, und wobei die Kunststoffrastlasche (4, 17, 17a) an einem Ende schwenkbar gelagert ist, **dadurch gekennzeichnet, dass** die Kunststoffrastlasche (4, 17, 17a) anschließend einen verformbaren Abschnitt (6, 19) und daneben einen schwenkbaren Abschnitt (7, 20, 20a) aufweist, wobei dem verformbaren Abschnitt (6, 19) ein Anschlag (9) an der Baugruppe (2, 24, 38) des Kraftfahrzeugs zugeordnet ist und wobei der hintergreifbare Bereich (12, 20b) am schwenkbaren Abschnitt (7, 20, 20a) vorgesehen ist.

2. Vorrichtung nach Anspruch 1, **dadurch gekennzeichnet, dass** eine dem Anschlag (9) an der Baugruppe (2, 24, 38) des Kraftfahrzeugs zugeordnete Seite (10) des verformbaren Abschnitts (6, 19) und eine dem Rasthaken (3, 22, 40) zugeordnete Seite (11) des schwenkbaren Abschnitts (7, 20, 20a) von der Lagerstelle (5, 14, 15) der Kunststoffrastlasche (4, 17, 17a) aus schräg voneinander weg verlaufen.

3. Vorrichtung nach Anspruch 1 oder 2, **dadurch gekennzeichnet**, das der schwenkbare Abschnitt (7, 20, 20a) eine größere Dicke als der verformbare Abschnitt (6, 19) aufweist.

4. Vorrichtung nach mindestens einem der vorhergehenden Ansprüche, **dadurch gekennzeichnet, dass** die Lagerstelle (5, 14, 15) der Kunststoffrastlasche (4, 17, 17a) an einer plattenförmigen Baugruppe (2, 24) des Kraftfahrzeugs oder an einem plattenförmigen Abschnitt einer mit einer Seitenwand (39) versehenen Baugruppe (38) des Kraftfahrzeuges im Abstand zu dieser Baugruppe bzw. diesem Abschnitt vorgesehen ist und dass der verformbare (6, 19) und der schwenkbare Abschnitt (7, 20, 20a) in einen Durchbruch (8, 25) dieser Baugruppe bzw. dieses Abschnitts ragen, wobei der verformbare Abschnitt (6, 19) an der Wand (9) des Durchbruchs (8, 25) anliegt.

5. Vorrichtung nach mindestens einem der vorhergehenden Ansprüche, **dadurch gekennzeichnet, dass** die Lagerstelle (5, 14, 15) der Kunststoffrastlasche (4, 17, 17a) an mindestens einer Seitenwand (39) der Baugruppe (38) des Kraftfahrzeuges im Abstand zu dieser Seitenwand vorgesehen ist, und dass der verformbare Abschnitt (19) an der Seitenwand (39) anliegt.

6. Vorrichtung nach mindestens einem der vorhergehenden Ansprüche, **dadurch gekennzeichnet, dass** für die Lagerung der Kunststoffrastlasche (4) zwei zumindest teilweise hohlzylinderförmige Lagerstellen (14) vorgesehen sind, in die zwei zylinderförmige Ansätze (13) der Kunststoffrastlasche (4) einsetzbar sind.

7. Vorrichtung nach Anspruch 6, **dadurch gekennzeichnet, dass** die Lagerstellen (14) nach Art von Klauen einseitig offen sind.

8. Vorrichtung nach mindestens einem der vorhergehenden Ansprüche, **dadurch gekennzeichnet, dass** die Lagerstelle (15) für die Kunststoffrastlasche (17, 17a) zylinderförmig ausgebildet ist und dass die Kunststoffrastlasche (17, 17a) einen über diese Lagerstelle (15) greifenden Ausschnitt (18) aufweist, der zumindest teilweise hohlzylinderförmig ist.

9. Vorrichtung nach Anspruch 8, **dadurch gekennzeichnet, dass** der Ausschnitt (18) nach Art einer Klaue einseitig offen ist.

10. Vorrichtung nach mindestens einem der vorherigen Ansprüche, **dadurch gekennzeichnet, dass** der Rasthaken (3, 22, 40) an der Airbageinheit (1, 21, 41) und die Lagerstelle (5, 14) für die Kunststoffrastlasche (4, 17, 17a) an der Baugruppe (2, 24, 38) des Kraftfahrzeugs vorgesehen sind.

11. Vorrichtung nach mindestens einem der Ansprüche 1 bis 10, **dadurch gekennzeichnet, dass** der schwenkbare Abschnitt (7, 20, 20a) der Kunststoffrastlasche 4, 17, 17a) eine dem Rasthaken (3, 22, 40) zugeordnete schräge Fläche (11) aufweist, die so verläuft, dass der Rasthaken (3, 22, 40) beim Druck auf diese Fläche zunehmend stärker geschwenkt wird.

12. Vorrichtung nach mindestens einem der vorhergehenden Ansprüche, **dadurch gekennzeichnet, dass** zur Verbindung der Airbageinheit (1, 21, 41) mit der Baugruppe (2, 24, 38) des Kraftfahrzeuges drei Rasthaken (22, 23) vorgesehen sind, wobei zwei Rasthaken (22) Kunststoffrastläschen (4, 17, 17a) zugeordnet sind, während dem dritten Rasthaken (23) ein Hinterschnitt (26, 27) in der gegenüberliegenden Baugruppe (24) zugeordnet ist.

13. Vorrichtung nach mindestens einem der Ansprüche 1 bis 11, **dadurch gekennzeichnet, dass** zur Verbindung der Airbageinheit (1, 21, 41) mit der Baugruppe (2, 24, 38) des Kraftfahrzeuges drei Rasthaken (22a, 23a) vorgesehen sind, wobei ein Rasthaken (22a) einer Kunststoffrastlasche zugeordnet ist, während den zwei weiteren Rasthaken (23a) jeweils ein Hinterschnitt in der gegenüberliegenden Baugruppe zugeordnet ist.

14. Vorrichtung nach mindestens einem der vorhergehenden Ansprüche, **dadurch gekennzeichnet, dass** als Baugruppe des Kraftfahrzeuges zur Befestigung der Airbageinheit (1, 21, 41) das Skelett (2, 24, 38) eines Lenkrades vorgesehen ist.

15. Vorrichtung nach mindestens einem der vorhergehenden Ansprüche, **dadurch gekennzeichnet, dass** die Airbageinheit (21) in einem Lenkrad zur Betätigung mindestens eines Hupenkontaktes (28) entgegen dem Druck mindestens einer Feder (30) in Richtung der Lenkradnabe oder einer Kontaktbrücke (24) bewegbar ist.

## Claims

1. A device for snap-fastening an airbag unit in a subassembly of a motor vehicle, especially in a steering wheel of a motor vehicle, snap-in elements associated with one another being provided on the airbag unit and on the subassembly of the motor vehicle, wherein at least one snap-in hook (3, 22, 40) is provided on the airbag unit (1, 21, 41) or on the subassembly of the motor vehicle (2, 24, 38), and wherein at least one pivotable plastic snap-in clip (4, 17, 17a) on the respective other subassembly is associated with the snap-in hook (3, 22, 40) and engages therewith in at least one region in the snap-in position, and wherein the plastic snap-in clip (4, 17, 17a) is mounted pivotably at one end, **characterized in that** the plastic snap-in clip (4, 17, 17a) has adjoining said end a deformable section (6, 19) adjacent to which is a swivelable section (7, 20, 20a), a stop (9) on the subassembly (2, 24, 38) of the motor vehicle being associated with the deformable section (6, 19) and the region (12, 20b) which can be engaged being provided on the swivelable section (7, 20, 20a).

2. The device as claimed in claim 1, **characterized in that** a side (10) of the deformable section (6, 19) associated with the stop (9) on the subassembly (2, 24, 38) of the motor vehicle, and a side (11) of the swivelable section (7, 20, 20a) associated with the snap-in hook (3, 22, 40), extend obliquely away from one another, starting from the bearing (5, 14, 15) of the plastic snap-in clip (4, 17, 17a).

3. The device as claimed in claim 1 or 2, **characterized in that** the swivelable section (7, 20, 20a) has a greater thickness than the deformable section (6, 19).

4. The device as claimed in at least one of the preceding claims, **characterized in that** the bearing (5, 14, 15) of the plastic snap-in clip (4, 17, 17a) is provided on a plate-shaped subassembly (2, 24) of the motor vehicle or on a plate-shaped section of a subassembly (38) of the motor vehicle provided with a lateral wall (39), at a distance from this subassembly or this section, and **in that** the deformable section (6, 19) and the swivelable section (7, 20, 20a) project into an opening (8, 25) of this subassembly or this section, the deformable section (6, 19) resting against the wall (9) of the opening (8, 25).

5. The device as claimed in at least one of the preceding claims, **characterized in that** the bearing (5, 14, 15) of the plastic snap-in clip (4, 17, 17a) is provided on at least one lateral wall (39) of the subassembly (38) of the motor vehicle at a distance from this lateral wall, and **in that** the deformable section (19) rests against the lateral wall (39).

6. The device as claimed in at least one of the preceding claims, **characterized in that** two at least partially hollow-cylindrical bearings (14) are provided for mounting the plastic snap-in clip (4), into which bearings (14) two cylindrical projections (13) of the plastic snap-in clip (4) are insertable.

7. The device as claimed in claim 6, **characterized in that** the bearings (14) are open on one side in the manner of claws.

8. The device as claimed in at least one of the preceding claims, **characterized in that** the bearing (15) for the plastic snap-in clip (17, 17a) is cylindrically formed and **in that** the plastic snap-in clip (17, 17a) has a recess (18) which engages over this bearing (15) and is at least partially hollow-cylindrically formed.

9. The device as claimed in claim 8, **characterized in that** the recess (18) is open on one side in the manner of a claw.

10. The device as claimed in at least one of the preceding claims, **characterized in that** the snap-in hook (3, 22, 40) is provided on the airbag unit (1, 21, 41) and the bearing (5, 14) for the plastic snap-in clip (4, 17, 17a) is provided on the subassembly (2, 24, 38) of the motor vehicle.

11. The device as claimed in at least one of claims 1 to 10, **characterized in that** the swivelable section (7, 20, 20a) of the plastic snap-in clip (4, 17, 17a) has, associated with the snap-in hook (3, 22, 40), an oblique face (11) which is disposed such that the snap-in hook (3, 22, 40) is swiveled by an increasing amount as it is pressed on this face.

12. The device as claimed in at least one of the preceding claims, **characterized in that** three snap-in hooks (22, 23) are provided for connecting the airbag unit (1, 21, 41) to the subassembly (2, 24, 38) of the motor vehicle, two snap-in hooks (22) being associated with plastic snap-in clips (4, 17, 17a) while an undercut (26, 27) in the opposite subassembly (24) is associated with the third snap-in hook (23).

13. The device as claimed in at least one of claims 1 to 11, **characterized in that** three snap-in hooks (22a, 23a) are provided for connecting the airbag unit (1, 21, 41) to the subassembly (2, 24, 38) of the motor vehicle, one snap-in hook (22a) being associated with a plastic snap-in clip while a respective undercut in the opposite subassembly is associated with each of the two further snap-in hooks (23a).

14. The device as claimed in at least one of the preceding claims, **characterized in that** the skeleton (2, 24, 38) of a steering wheel is provided as the subassembly of the motor vehicle for fastening of the airbag unit (1, 21, 41).

15. The device as claimed in at least one of the preceding claims, **characterized in that** the airbag unit (21) is movable in a steering wheel in the direction of the steering wheel hub or of a contact bridge (24) against the pressure of at least one spring (30) in order to actuate at least one horn contact (28).

## Revendications

1. Dispositif pour la fixation par enclenchement d'une unité d'airbag dans un groupe structurel d'un véhicule automobile, en particulier dans un volant de direction d'un véhicule automobile, dans lequel des éléments d'enclenchement mutuellement associés sont prévus sur l'unité d'airbag et sur le groupe structurel du véhicule automobile, de telle façon qu'au moins un crochet d'enclenchement (3, 22, 40) est prévu sur l'unité d'airbag (1, 21, 41) ou sur le groupe structurel du véhicule automobile (2, 24, 38), et qu'au moins une patte d'enclenchement pivotante en matière plastique (4, 17, 17a) est associée à l'autre groupe structurel respectif, qui, dans la position enclenchée, engage le crochet d'enclenchement (3, 22, 40) dans au moins une région par l'arrière, et la patte d'enclenchement en matière plastique (4, 17, 17a) est montée pivotante à une extrémité,
**caractérisé en ce que** la patte d'enclenchement en matière plastique (4, 17, 17a) comporte un tronçon déformable (6, 19) et à côté de celui-ci un tronçon pivotant (7, 20, 20a), dans lequel une butée (9) sur le groupe structurel (2, 24, 38) du véhicule automobile est associée au tronçon déformable (6, 19), et la région (12, 20b) susceptible d'être engagée par l'arrière est prévue sur le tronçon pivotant (7, 20, 20a).

2. Dispositif selon la revendication 1, **caractérisé en ce qu'**un côté (10), associé à la butée (9) sur le groupe structurel (2, 24, 38) du véhicule automobile, du tronçon déformable (6, 19) et un côté (11), associé au crochet d'enclenchement (3, 22, 40), du tronçon pivotant (7, 20, 20a) s'étendent en éloignement l'un de l'autre et en oblique depuis l'emplacement de montage (5, 14, 15) de la patte d'enclenchement (4, 17, 17a) en matière plastique.

3. Dispositif selon la revendication 1 ou 2, **caractérisé en ce que** le tronçon pivotant (7, 20, 20a) présente une épaisseur plus élevée que le tronçon déformable (6, 19).

4. Dispositif selon l'une au moins des revendications précédentes, **caractérisé en ce que** l'emplacement de montage (5, 14, 15) de la patte d'enclenchement en matière plastique (4, 17, 17a) est prévu sur un groupe structurel (2, 24) en forme de plaque du véhicule automobile ou sur un tronçon en forme de plaque d'un groupe structurel (38), pourvu d'une paroi latérale (39), du véhicule automobile, à distance de ce groupe structurel ou de ce tronçon, et **en ce que** le tronçon déformable (6, 19) et le tronçon pivotant (7, 20, 20a) pénètre dans une traversée (8, 25) de ce groupe structurel ou de ce tronçon, et dans lequel le tronçon déformable (6, 19) s'applique contre la paroi (9) de la traversée (8, 25).

5. Dispositif selon l'une au moins des revendications précédentes, **caractérisé en ce que** l'emplacement de montage (5, 14, 15) de la patte d'enclenchement en matière plastique (4, 17, 17a) est prévu sur au moins une paroi latérale (39) du groupe structurel (38) du véhicule automobile à distance de cette paroi latérale, et **en ce que** le tronçon déformable (19) s'applique contre la paroi latérale (39).

6. Dispositif selon l'une au moins des revendications précédentes, **caractérisé en ce que**, pour le montage de la patte d'enclenchement en matière plastique (4), il est prévu deux emplacements de montage (14) au moins partiellement sous forme cylindrique creuse, dans lesquels deux talons (13) de forme cylindrique de la patte d'enclenchement en matière plastique (4) peuvent être mis en place.

7. Dispositif selon la revendication 6, **caractérisé en ce que** les emplacements de montage (14) sont ouverts sur un côté à la manière de griffe.

8. Dispositif selon l'une au moins des revendications précédentes, **caractérisé en ce que** l'emplacement de montage (15) pour la patte d'enclenchement en matière plastique (17, 17a) est réalisé sous forme cylindrique, et **en ce que** la patte d'enclenchement en matière plastique (17, 17a) comprend un tronçon (18) qui coiffe cet emplacement de montage (15) et qui est réalisé au moins partiellement sous forme de cylindre creux.

9. Dispositif selon la revendication 8, **caractérisé en ce que** le tronçon (18) est ouvert sur un côté à la manière d'une griffe.

10. Dispositif selon l'une au moins des revendications précédentes, **caractérisé en ce que** le crochet d'enclenchement (3, 22, 40) est prévu sur l'unité d'airbag (1, 21, 41) et **en ce que** l'emplacement de montage (5, 14) pour la patte d'enclenchement en matière plastique (4, 17, 17a) est prévu sur le groupe structurel (2, 24, 38) du véhicule automobile.

11. Dispositif selon l'une au moins des revendications 1 à 10, **caractérisé en ce que** le tronçon pivotant (7, 20, 20a) de la patte d'enclenchement en matière plastique (4, 17, 17a) comporte une surface oblique (11), associée au crochet d'enclenchement (3, 22, 40), laquelle s'étend de telle manière que le crochet d'enclenchement (3, 22, 40) est pivoté de plus en plus fort sous une pression sur cette surface.

12. Dispositif selon l'une au moins des revendications précédentes, **caractérisé en ce que**, pour la liaison de l'unité d'airbag (1, 21, 41) avec le groupe structurel (2, 24, 38) du véhicule automobile, il est prévu trois crochets d'enclenchement (22, 23), deux crochets d'enclenchement (22) étant associés à des pattes d'enclenchement en matière plastique (4, 17, 17a), tandis qu'une contre-dépouille (26, 27) dans le groupe structurel opposé (24) est associée au troisième crochet d'enclenchement (23).

13. Dispositif selon l'une au moins des revendications 1 à 11, **caractérisé en ce que**, pour la liaison de l'unité d'airbag (1, 21, 42) avec le groupe structurel (2, 24, 31) du véhicule automobile, il est prévu trois crochets d'enclenchement (22a, 23a), un crochet d'enclenchement (22,a) étant associé à une patte d'enclenchement en matière plastique, tandis qu'une contre-dépouille dans le groupe structurel opposé est respectivement associée aux deux autres crochets d'enclenchement (23a).

14. Dispositif selon l'une au moins des revendications précédentes, **caractérisé en ce que** l'ossature (2, 24, 38) d'un volant de direction est prévue à titre de groupe structurel du véhicule automobile pour la fixation de l'unité d'airbag (1, 21, 41).

15. Dispositif selon l'une au moins des revendications précédentes, **caractérisé en ce que** l'unité d'airbag (21) est mobile dans un volant de direction à l'encontre de la pression d'au moins un ressort (30), en direction du moyeu du volant ou en direction d'un pont de contact (24) pour l'actionnement d'au moins un contact de klaxon (28).
